(19) Europäisches Patentamt
European Patent Office
Office européen des brevets

(11) **EP 3 044 547 B1**

(12) **EUROPÄISCHE PATENTSCHRIFT**

(45) Veröffentlichungstag und Bekanntmachung des Hinweises auf die Patenterteilung:
**14.11.2018 Patentblatt 2018/46**

(51) Int Cl.:
*G06Q 30/02* *(2012.01)*    *G01C 21/34* *(2006.01)*
*G07B 15/02* *(2011.01)*    *G01C 21/36* *(2006.01)*

(21) Anmeldenummer: **14766680.4**

(22) Anmeldetag: **10.09.2014**

(86) Internationale Anmeldenummer:
**PCT/EP2014/069252**

(87) Internationale Veröffentlichungsnummer:
**WO 2015/036416 (19.03.2015 Gazette 2015/11)**

(54) **VORRICHTUNG UND VERFAHREN ZUR MOBILITÄTSSTEUERUNG**

DEVICE AND METHOD FOR CONTROLLING MOBILITY

DISPOSITIF ET PROCÉDÉ POUR LA GESTION DE LA MOBILITÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.09.2013 DE 102013218046**

(43) Veröffentlichungstag der Anmeldung:
**20.07.2016 Patentblatt 2016/29**

(73) Patentinhaber: **Volkswagen Aktiengesellschaft 38440 Wolfsburg (DE)**

(72) Erfinder: **HOCH, Nicklas 30559 Hannover (DE)**

(56) Entgegenhaltungen:
**EP-A2- 2 075 546    US-A1- 2011 224 899**
**US-B1- 6 411 895**

**Beschreibung**

Die vorliegende Erfindung betrifft Verfahren, Vorrichtungen, Serveranordnungen und Systeme zur Mobilitätssteuerung von Fahrzeugen, insbesondere von Kraftfahrzeugen wie Personenkraftwagen (PKW) oder Lastkraftwagen (LKW).

Zur Unterstützung von Fahrern bei der Reiseplanung sind verschiedene technische Hilfsmittel, beispielsweise Navigationssysteme, bekannt, welche dem Fahrer beispielsweise eine Route vorschlagen und ihn zu einem gewünschten Ziel führen. Derartige Systeme sind häufig nur darauf ausgelegt, für den jeweiligen Fahrer eine bestmögliche Lösung zu finden, ohne Bedürfnisse anderer Verkehrsteilnehmer zu berücksichtigen. Generell ist es jedoch wünschenswert, Reisen individueller Fahrzeuge in komplexen und ressourcenbegrenzten Verkehrssystemen zu optimieren. Ressourcenbegrenzt bedeutet in diesem Zusammenhang, dass Einrichtungen des Verkehrssystems nur von einer beschränkten Anzahl von Fahrzeugen effizient genutzt werden können. Beispielsweise entstehen Staus, wenn zu viele Fahrzeuge eine bestimmte Straße benutzen, Parkplätze sind nur in begrenzter Anzahl vorhanden etc. Existierende Navigationslösungen können dabei beispielsweise unter Berücksichtigung von Verkehrsinformationen oder Parkplatzverfügbarkeiten eine Route von einem Startort A zu einem Zielort B entlang eines Straßennetzes berechnen. Dabei können unterschiedliche Kostenfunktionen berücksichtigt werden, wie beispielsweise die Fahrtzeit oder der Energieverbrauch des Fahrzeugs. Ebenso sind Verfahren bekannt, welche eine Route für eine Sequenz von vielen gewünschten Zielen berechnen. Derartige Verfahren können beispielsweise eine Reihenfolge der Ziele optimieren und/oder Verweilzeiten und Ressourcenbegrenzungen wie z.B. Frachtkapazität berücksichtigen. Des Weiteren sind Verkehrsmanagementsysteme bekannt. Eine zentrale Koordinationseinheit legt bei derartigen Verkehrsmanagementsystemen auf Basis aktueller Verkehrszustände beispielsweise Geschwindigkeitsbegrenzungen oder Ampelphasen dynamisch fest. Bei derartigen herkömmlichen Lösungen hängt das Verbesserungspotenzial gegenüber einer Situation ohne derartige Lösungen maßgeblich von einer Ausstattungsrate ab, d.h. davon, welcher Anteil von Fahrzeugen die entsprechenden Lösungen nutzt und mit entsprechenden Vorrichtungen ausgestattet ist. So werden bei vielen der herkömmlichen Lösungen bei einer Ausstattungsrate von beispielsweise 25 % von ausgestatteten Fahrzeugen große Vorteile gegenüber nicht ausgestatteten Fahrzeugen erzielt. Bei höheren Ausstattungsraten von beispielsweise 60 % bis 80 % tritt jedoch häufig ein gegenläufiger Effekt auf, so dass in diesem Fall ausgestattete Fahrzeuge schlechter abschneiden als nicht ausgestattete Fahrzeuge. Eine höhere Auflösung von zur Verfügung stehenden relevanten Informationen beispielsweise hinsichtlich Verkehrsdichte und dergleichen kann diesen negativen Effekt in Richtung höherer Ausstattungsraten verschieben, aber nicht beseitigen. Der Grund ist systembedingt, da die herkömmlichen Lösungen sich bezüglich der zur Verfügung stehenden Ressourcen kompetitiv gegenüber anderen Verkehrsteilnehmern verhalten und nur die individuelle lokale Sicht berücksichtigen. Die den Systemen zur Verfügungen stehenden Informationen verschaffen ihnen bei geringer Ausstattungsrate einen Vorteil gegenüber nicht ausgestatteten Fahrzeugen. Plant jedoch eine große Anzahl von ausgestatteten Fahrzeugen auf derselben Informationsgrundlage und optimiert beispielsweise nach derselben lokalen Kostenfunktion, werden globale Engpässe generiert, da beispielsweise alle ausgestatteten Fahrzeuge bei einem Stau die gleiche Ausweichroute benutzen. So entsteht der oben erwähnte negative Effekt gegenüber nicht ausgestatteten Fahrzeugen.

Auf der anderen Seite haben zentrale Verkehrsmanagementsysteme aus globaler Systemperspektive die Möglichkeit, Ressourcen insgesamt effizient zu verteilen. Sie berücksichtigen dabei jedoch nicht oder kaum die Auswirkungen von Entscheidungen auf eine Reisequalität individueller Fahrer. Beispielsweise kann die Reisequalität einzelner Fahrer zum Wohle des Gesamtsystemverhaltens stark reduziert werden. Zudem ist eine Implementierung bei großen Verkehrssystemen und offenen Systemgrenzen aufwändig.

Aus der DE 102011 122 191 A1 und der DE 10 2006 014 024 A1 sind Parkleitsysteme bekannt, bei welchen freie Parkplätze und/oder wahrscheinlich freie Parkplätze in einem zentralen System erfasst werden. Von einem Fahrzeug kann dem zentralen System zudem eine Präferenz eines Fahrers beispielsweise hinsichtlich Lage oder Preis eines gewünschten Parkplatzes mitgeteilt werden, woraufhin das System dann an das Fahrzeug Daten für einen anzufahrenden Parkplatz übermittelt. Diese zentrale Berechnung weist jedoch zum einen Probleme hinsichtlich des Datenschutzes auf und ist zum anderen mit steigender Systemgröße zunehmend schwierig zu implementieren, da das zentrale System für jede Anfrage einen geeigneten Parkplatz berechnen muss.

Aus der DE 10 2006 032 374 A1 ist demgegenüber ein rein dezentrales Netzwerk bekannt, welches von Fahrzeugkommunikationseinrichtungen gebildet werden kann. Dabei kann ein Fahrzeug an andere Fahrzeuge eine Anfrage nach einer bestimmten Ressource, beispielsweise nach einem Parkplatz, stellen. Ein derartiges System eignet sich nicht zur globalen Mobilitätssteuerung, sondern kann lediglich einzelnen Fahrzeugen helfen, eine benötigte Ressource schnell zu finden.

Aus der DE 2004 001 820 A1 ist ein Navigationssystem bekannt, bei welchem das Navigationssystem beispielsweise aus dem Internet Informationen beschaffen kann, welche dann in eine Routenempfehlung einfließen. Beispielsweise können derartige Informationen Gebühreninformationen für die Benutzung einer Einrichtung, eine Parkgebühr und dergleichen umfassen.

Aus der EP 1 255 964 B1 ist schließlich ein Navigationssystem bekannt, bei welchem auf einem Speichermedium zu Sonderzielen wie Tankstellen, Posthäusern oder Parkhäusern Zusatzinformationen wie Öffnungszeiten oder Tarife abgespeichert sind. Diese Zusatzinformationen können von dem Navigationssystem bei der Routenplanung eingesetzt werden, so dass beispielsweise anstelle eines nächstgelegenen, aber geschlossenen Sonderziels ein weiter entfernt liegendes, aber geöffnetes gewählt wird. Ein derartiges System kann jedoch nicht sich dynamisch verändernde Ressourcennutzungen berücksichtigen.

Aus der DE 10 2006 050 096 A1 ist ein Navigationssystem bekannt, welches Kraftstoffpreise und Benutzerpräferenzen berücksichtigt. Dieses System ist ein einseitiges Steuersystem.Es findet keine Rückmeldung von dem Fahrzeug beispielsweise zu Tankstellenbetreibern statt.

Aus der EP 2 075 546 A2 ist eine Navigationsvorrichtung zur Verwendung in einem Fahrzeug bekannt, die eine Führungsroute zu einer eine Straßenparkzone bereitstellt, die auf Straßenparkinformationen basiert.

Aus der US 6 411 895 B1 ist ein Navigationsverfahren zur Berechnung einer Fahrtroute von einem Start- oder aktuellen Fahrzeugstandort zu einem Zielort und zur Leitung eines Fahrzeugführers entlang der berechneten Fahrtroute bekannt, wobei zu einem benutzerdefinierten Zielort mindestens eine Parkmöglichkeit vorgeschlagen wird.

Aus der US 2011/0224899 A1 ist ein Navigationsverfahren bekannt, wobei eine auf einem tatsächlichen Parkzustand eines Straßenparkplatzes basierende Route bestimmt wird, wobei die Route von der aktuellen Position eines Benutzers zu dem Straßenparkplatz führt.

Es ist daher eine Aufgabe der vorliegenden Erfindung, Verfahren und Vorrichtungen zur Mobilitätssteuerung bereitzustellen, welche auch in großen Verkehrssystemen mit relativ geringem Aufwand zu implementieren sind, bei welchen sowohl die globale Ressourcenverteilung als auch individuelle Wünsche der Fahrer berücksichtigt werden und bei welchen möglichst ausgestattete Fahrzeuge auch bei höherem Ausstattungsgrad nicht schlechter abschneiden als nicht ausgestattete Fahrzeuge.

Diese Aufgabe wird gelöst durch ein Verfahren nach Anspruch 1, eine Vorrichtung für ein Fahrzeug nach Anspruch 9 und eine Serveranordnung nach Anspruch 12. Die Unteransprüche definieren weitere Ausführungsbeispiele.

Die Erfindung bezieht sich zudem auf ein System mit einer derartigen Serveranordnung und mindestens einer derartigen Vorrichtung für ein Fahrzeug sowie auf ein mit einer derartigen Vorrichtung ausgerüstetes Fahrzeug.

Erfindungsgemäß wird ein Verfahren zur Mobilitätssteuerung bereitgestellt, umfassend: Bestimmen von Marktpreisen für Mobilitätsressourcen in einer dezentralen oder zentralen Serveranordnung in Abhängigkeit von einer Nachfrage nach den Mobilitätsressourcen, Empfangen von mindestens einem der Marktpreise von der Serveranordnung in einer einem Fahrzeug zugeordneten Vorrichtung,

Festlegen einer Präferenz durch einen Nutzer des Fahrzeugs, und

Bestimmen einer Routenempfehlung auf Basis des mindestens einen empfangenen Marktpreises und der Präferenz in der dem Fahrzeug zugeordneten Vorrichtung.

Bei einem derartigen Verfahren können durch das Bestimmen von Marktpreisen globale Interessen und die Ressourcenverteilung zwischen Verkehrsteilnehmern unter Berücksichtigung der Nachfrage gesteuert werden. Auf der anderen Seite können auf der Ebene des Fahrzeugs durch das Festlegen einer Präferenz durch einen Nutzer individuelle Interessen des jeweiligen Nutzers des Fahrzeugs berücksichtigt werden. Zudem kann, da die Bestimmung der Routenempfehlung in der dem Fahrzeug zugeordneten Vorrichtung erfolgt, die Serveranordnung entlastet werden und einfach skalierbar sein, da insbesondere die Serveranordnung nicht verschiedene Nutzer berücksichtigen muss, sondern lediglich Marktpreise auf Basis von Nachfrageinformationen und/oder Ressourcenverfügbarkeiten bestimmen muss, wobei es sich auch um prognostizierte Nachfrageinformationen und/oder Ressourcenverfügbarkeiten handeln kann. Die dem Fahrzeug zugeordnete Vorrichtung kann beispielsweise in dem Fahrzeug oder einem Backend des Fahrzeugs bereitgestellt sein.

Unter Mobilitätsressource ist dabei allgemein eine Ressource zu verstehen, deren Verfügbarkeit und/oder deren Kosten für eine Routenplanung von Interesse ist. Beispiele für Mobilitätsressourcen sind Verkehrswege, Tankstellen, Ladesäulen für Elektrofahrzeuge, Parkplätze und dergleichen. Unter Marktpreisen sind generell Kostenparameter zu verstehen, welche insbesondere in Abhängigkeit von einer Verfügbarkeit der jeweiligen Mobilitätsressource und/oder Kosten der jeweiligen Mobilitätsressource von der Serveranordnung bestimmt werden können. Beispielsweise kann der Marktpreis eines Verkehrsweges steigen, wenn viele Fahrzeuge den jeweiligen Verkehrsweg benutzen, ein Marktpreis eines Parkplatzes kann von den Kosten des Parkplatzes (Parkgebühren) und/oder der Anzahl verfügbarer (nicht belegter) Parkplätze abhängen, etc. Auch wenn in den Marktpreis tatsächliche Kosten wie Parkplatzkosten einfließen können, ist zu beachten, dass der Marktpreis hier als Parameter zur Verkehrssteuerung und optimalen Ressourcennutzung dient und somit gleichsam einen Parameter zur Bewertung der Mobilitätsressourcen, insbesondere deren Verfügbarkeit, darstellt. Der Marktpreis dient hier also primär zur Verkehrssteuerung, d.h. primär einem nicht auf Gewinnerzielung ausgerichteten Zweck und insbesondere nicht notwendigerweise der Gewinnmaximierung von Anbietern. Er stellt insbesondere nicht notwendigerweise einen realen zu bezahlenden Preis dar.

Durch das Festlegen einer Präferenz kann der Nutzer des Fahrzeugs seine eigenen Vorlieben in die Bestimmung der Routenempfehlung einfließen lassen. Das Festlegen der Präferenz kann dabei direkt durch eine Nutzereingabe oder auch indirekt erfolgen, z.B. indem die Präferenz aus einem Verhalten des Fahrers abgeleitet wird. Unter der Präferenz eines Fahrers ist im mathematischen Sinne eine Kostenfunktion zu verstehen, welche einzelnen Kriterien eine Gewichtung zuordnet. Beispielsweise hätten Fahrer mit einer Präferenz für kostengünstiges Reisen eine hohe Gewichtung der Kriterien Parkkosten und/oder Energieverbrauch. Als Resultat dieser Gewichtung würde die Routenempfehlung kostengünstige oder kostenlose Parkplätze und/oder Routen, auf welchen der Energieverbrauch niedrig ist, bevorzugen. Bei anderen Fahrern können andererseits dieselben Kriterien eine niedrigere Bedeutung und somit Gewichtung haben. Ihnen könnte es wichtiger sein schnell zum Ziel zu gelangen und/oder nah am Zielort parken zu können, ungeachtet der damit verbundenen geldwerten Kosten. Somit können vorteilhafterweise die Vorlieben einzelner Nutzer berücksichtigt werden.

Zum Bestimmen der Marktpreise kann die Serveranordnung entsprechende Informationen über die Mobilitätsressourcen und deren Nutzung empfangen, beispielsweise von Fahrzeugen, Verkehrsleitsystemen, Betreibern von Parkplätzen, Betreibern von Tankstellen oder Ladesäulen für Elektrofahrzeuge etc. Auf diese Weise können die Marktpreise eine globale Sicht umfassend widerspiegeln.

Insbesondere kann die Serveranordnung von Fahrzeugen Nachfrageinformationen bezüglich einer Nachfrage nach einer bestimmten Mobilitätsressource empfangen, gegebenenfalls in Verbindung mit einem maximal akzeptierten Preis, den das jeweilige Fahrzeug für die Nutzung der Mobilitätsressource "zahlen" würde. Auf diese Weise kann die Serveranordnung dann den Marktpreis derart anpassen, dass eine Auslastung der Mobilitätsressourcen optimiert wird.

Dabei können bei der Bestimmung der Routenempfehlung insbesondere Marktpreise für zwei oder mehr verschiedene Arten von Mobilitätsressourcen, z.B. Verkehrswege und Parkplätze, Verkehrswege und Tankstellen bzw. Ladesäulen etc. herangezogen werden. Auf diese Weise können mehrere Gesichtspunkte gemeinsam berücksichtigt werden. In anderen Worten werden bei einem bevorzugten Ausführungsbeispiel Marktpreise für unterschiedliche Mobilitätsressourcen, welche für eine geplante Reise relevant sind, empfangen, beispielsweise Marktpreise für potenziell benutzbare Verkehrswege, Marktpreise für Parkplätze am Ende des Verkehrsweges, gegebenenfalls Marktpreise für Ladestationen oder Tankstellen entlang der Verkehrswege usw. Auch können für verschiedene Arten von Mobilitätsressourcen verschiedene Präferenzen festgelegt werden. Auf diese Weise kann die Routenempfehlung dann viele verschiedene Aspekte der Reise sowohl aus globaler Sicht über die Marktpreise als auch aus lokaler Sicht basierend auf den Präferenzen des Nutzers bestimmen. In anderen Worten werden verschiedene Gesichtspunkte wie Parkplatzkosten, Auslastung von Verkehrswegen etc. verknüpft und gemeinsam berücksichtigt.

Eine erfindungsgemäße Serveranordnung umfasst dementsprechend eine Recheneinrichtung zum Bestimmen von Marktpreisen für Mobilitätsressourcen in Abhängigkeit von einer Nachfrage sowie eine Kommunikationsschnittstelle zum Übermitteln der Marktpreise an Fahrzeuge. Die Kommunikationsschnittstelle kann auch zum Empfang von Informationen hinsichtlich der Mobilitätsressourcen dienen. Bei Ausführungsbeispielen umfasst die dezentrale oder zentrale Serveranordnung mehrere verteilte Einrichtungen, was die Implementierung erleichtern kann. Die mehreren Einrichtungen können dann bevorzugt wechselseitig Informationen und/oder Marktpreise austauschen. Beispielsweise können verschiedene Einrichtungen für verschiedene geographische Gebiete oder für verschiedene Arten von Mobilitätsressourcen zuständig sein. Dabei ist eine hierarchische Gliederung auf mehreren Ebenen möglich. Durch eine derartige verteilte Implementierung kann besagte Serveranordnung effizient und mit relativ geringem Aufwand der einzelnen Einrichtungen implementiert sein. In einer derartigen Serveranordnung können insbesondere die serverseitigen Teile des oben beschriebenen Verfahrens implementiert sein.

Eine entsprechende Vorrichtung für ein Fahrzeug, z.B. zum Einbau in ein Fahrzeug oder für ein Backend eines Fahrzeugs, umfasst eine Kommunikationsschnittstelle zum Empfangen mindestens eines Marktpreises von einer zentralen oder dezentralen Serveranordnung und zum Senden einer Nachfrageinformation, optional in Verbindung mit einem zusätzlichen Preis-Parameter, an die zentrale oder dezentrale Serveranordnung, eine Nutzerschnittstelle, über welche eine Präferenz durch einen Nutzer des Fahrzeugs direkt oder indirekt festgelegt werden kann, und eine Recheneinrichtung zum Bestimmen einer Routenempfehlung auf Basis des mindestens einen Marktpreises und der Präferenz. Mit einer derartigen Vorrichtung können insbesondere vorteilhafterweise die fahrzeugseitigen Vorgänge des oben beschriebenen Verfahrens implementiert werden.

Zusammenfassend können durch erfindungsgemäße Verfahren, Vorrichtungen, Serveranordnungen und Systeme Möglichkeiten bereitgestellt werden, mit relativ geringem Implementierungsaufwand sowohl globale Aspekte als auch lokale Wünsche zu berücksichtigen, wobei insbesondere ein höherer Grad an ausgestatteten Fahrzeugen nicht zu Nachteilen für die ausgestatteten Fahrzeuge führt, da verschiedene Präferenzen von Nutzern berücksichtigt werden und somit verschiedene Fahrzeuge zu verschiedenen Routenempfehlungen kommen können.

Die Erfindung wird nachfolgend unter Bezugnahme auf die beigefügten Zeichnungen anhand von Ausführungsbeispielen näher erläutert. Es zeigen:

Fig. 1 ein einfaches Diagramm eines Systems zur Mobilitätssteuerung gemäß einem Ausführungsbeispiel,

Fig. 2 ein Flussdiagramm zur Veranschaulichung eines Verfahrens gemäß einem Ausführungsbeispiel,

Fig. 3 ein detaillierteres Diagramm eines Systems zur Mobilitätssteuerung gemäß einem Ausführungsbeispiel,

Fig. 4 ein Blockdiagramm einer Vorrichtung für ein Fahrzeug gemäß einem Ausführungsbeispiel,

Fig. 5 ein Blockdiagramm eines Levelmanagers einer Serveranordnung gemäß einem Ausführungsbeispiel,

Fig. 6 ein Diagramm zur Veranschaulichung einer Kommunikation zwischen einer Vorrichtung in einem Fahrzeug, einer Serveranordnung und weiteren Komponenten,

Fig. 7 ein Beispiel für eine Nutzerschnittstelle zum Eingeben einer Präferenz,

Fig. 8 ein Diagramm zur Veranschaulichung einer Optimierung einer Parkplatzsuche gemäß einem Ausführungsbeispiel,

Fig. 9 ein Diagramm zur Veranschaulichung eines Ausführungsbeispiels zur Parkplatzsuche,

Fig. 10 ein Diagramm zur Veranschaulichung des Festlegens von Marktpreisen in Abhängigkeit von einer Nachfrage, und

Fig. 11 ein Diagramm zur Veranschaulichung der Funktionsweise mancher Ausführungsbeispiele.

Im Folgenden werden Ausführungsbeispiele der vorliegenden Erfindung detailliert erläutert. Es ist zu bemerken, dass diese Ausführungsbeispiele lediglich der Veranschaulichung dienen und nicht als einschränkend auszulegen sind. Während Ausführungsbeispiele mit einer Vielzahl von Merkmalen und Elementen beschrieben werden, ist dies nicht dahingehend auszulegen, dass alle diese Merkmale oder Elemente zur Ausführung der Erfindung notwendig sind. Vielmehr können bei anderen Ausführungsbeispielen manche der dargestellten Merkmale oder Elemente weggelassen sein und/oder durch alternative Merkmale oder Elemente ersetzt werden, und/oder es können zusätzliche Merkmale oder Elemente bereitgestellt sein. Zudem können Merkmale oder Elemente verschiedener Ausführungsbeispiele miteinander kombiniert werden, sofern nichts anderes angegeben ist.

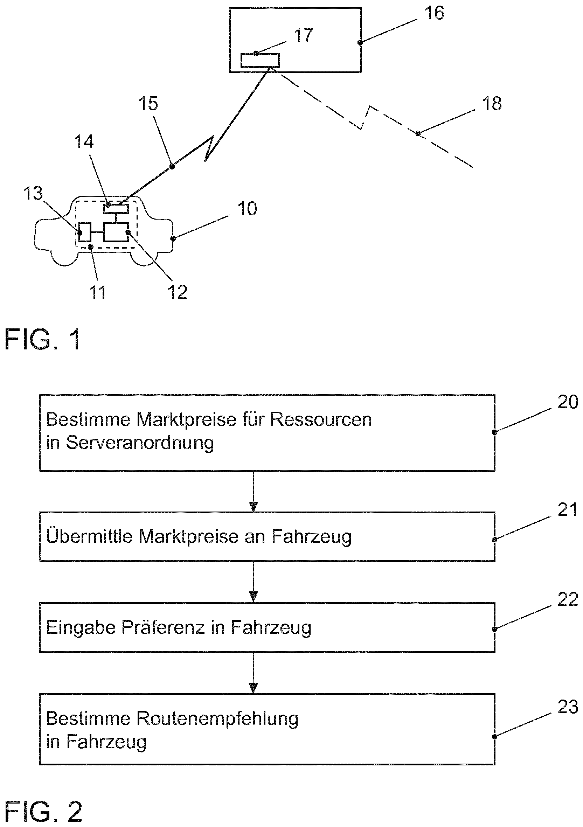

In Fig. 1 ist ein Diagramm eines Systems zur Mobilitätssteuerung gemäß einem Ausführungsbeispiel der Erfindung schematisch dargestellt. Das System der Fig. 1 umfasst insbesondere eine in einem ausgerüsteten Fahrzeug 10 angeordnete Vorrichtung 11 gemäß einem Ausführungsbeispiel sowie eine zentrale Serveranordnung 16 gemäß einem Ausführungsbeispiel. Die Vorrichtung 11 umfasst eine Kommunikationsschnittstelle 14, während die Serveranordnung 16 eine Kommunikationsschnittstelle 17 umfasst. Die Kommunikation kann insbesondere drahtlos wie durch eine Linie 15 angedeutet erfolgen, beispielsweise drahtlos über ein Mobilfunknetzwerk wie ein GSM-Netzwerk, ein UMTS-Netzwerk oder LTE-Netzwerk, oder beispielsweise auch über andere herkömmliche drahtlose Kommunikationstechniken. Wie durch eine gestrichelte Linie 18 angedeutet, kann die zentrale Serveranordnung auch mit weiteren Einheiten, insbesondere weiteren Fahrzeugen oder Einheiten, welche Informationen bereitstellen, kommunizieren. Insbesondere kann die zentrale Serveranordnung 16 über die Kommunikationsschnittstelle 17 Informationen hinsichtlich Mobilitätsressourcen empfangen, beispielsweise hinsichtlich einer Auslastung von Mobilitätsressourcen wie Parkplätzen, Verkehrswegen, Ladesäulen für Elektrofahrzeuge etc. oder auch über Kosten von Mobilitätsressourcen wie Parkgebühren, Spritpreise von Tankstellen etc. Derartige Informationen können von anderen zentralen Einheiten wie beispielsweise Verkehrsleitstellen oder auch von entsprechend ausgerüsteten Fahrzeugen empfangen werden. Insbesondere können von den Fahrzeugen Nachfrageinformationen hinsichtlich einer Nachfrage nach Mobilitätsressourcen gesendet werden. Derartige Nachfrageinformationen können, wie später noch ausführlicher erläutert werden wird, auch eine Information hinsichtlich eines maximal akzeptierten Preises enthalten. Wie bereits oben erläutert ist der Begriff "Preis" ebenso wie der Begriff "Marktpreis" nicht notwendigerweise in einem monetären Sinn zu verstehen, sondern "Marktpreise" oder "Preise" können bei Ausführungsbeispielen als Parameter zur Verkehrssteuerung dienen. Die Serveranordnung 16 kann, wie später erläutert werden wird, eine Recheneinrichtung zur Kombination der Informationen und Festlegung von Marktpreisen aufweisen.

Die Vorrichtung 11 der Fig. 1 umfasst weiterhin eine Nutzerschnittstelle 13, über welche ein Fahrer eine Präferenz hinsichtlich der zu berechnenden Reise und damit auch direkt oder indirekt hinsichtlich der Mobilitätsressourcen eingeben kann. Beispiele hierfür werden später erörtert. Zudem weist die Vorrichtung 11 eine Recheneinrichtung 12 auf, mit welchen auf Basis der Präferenz und auf Basis von einem oder mehreren Marktpreisen, welche von der Serveranordnung 16 empfangen werden, eine Routenempfehlung bestimmt und über die Nutzerschnittstelle 13 ausgegeben werden kann. Zu bemerken ist, dass die Vorrichtung 11 dabei eine Vorrichtung sein kann, welche auch anderen Zwecken dient. Beispielsweise können die beschriebenen Funktionalitäten in einem Navigationssystem oder einem Infotainmentsystem eines Fahrzeugs integriert sein.

In Fig. 2 ist ein Flussdiagramm eines Verfahrens gemäß einem Ausführungsbeispiel dargestellt, anhand dessen die Funktionsweise des Systems der Fig. 1 nochmals etwas detaillierter erläutert wird. In anderen Worten kann das Verfahren der Fig. 2 in dem System der Fig. 1 implementiert sein, ist jedoch nicht hierauf beschränkt und kann auch mittels anderer Systeme und Vorrichtungen implementiert werden.

Bei 20 werden Marktpreise für Mobilitätsressourcen wie Verkehrswege, Parkplätze, Ladesäulen, Tankstellen und dergleichen in einer Serveranordnung wie der Serveranordnung 16 der Fig. 1 in Abhängigkeit von einer Nachfrage und optional in Verbindung mit einem zusätzlichen Preis-Parameter bestimmt. Hierzu kann die Serveranordnung Informationen bezüglich der Mobilitätsressourcen erhalten. Beispielsweise kann eine Auslastung der Mobilitätsressourcen eine Nachfrage nach Mobilitätsressourcen oder können Kosten der Mobilitätsressourcen mitgeteilt werden, um auf dieser Basis die Marktpreise zu bestimmen. Beispielsweise kann eine höhere Auslastung den Marktpreis erhöhen, während eine niedrigere Auslastung den Marktpreis erniedrigen kann. Bei kostenpflichtigen Mobilitätsressourcen wie manchen Parkplätzen kann der Marktpreis den Kosten entsprechen oder aus einer Kombination der Kosten und der Auslastung bestimmt werden.

Bei 21 werden ein Marktpreis oder mehrere Marktpreise an ein Fahrzeug, beispielsweise die Vorrichtung 11 des Fahrzeugs 10 der Fig. 1, oder an eine dem Fahrzeug zugeordnete externe Vorrichtung übermittelt. Dies kann insbesondere auf Anforderung des Fahrzeugs geschehen.

Bei 22 gibt ein Nutzer, beispielsweise ein Fahrer, des Fahrzeugs, eine Präferenz hinsichtlich der Reisekriterien ein, beispielsweise über die Nutzerschnittstelle 13 der Fig. 1. Beispielsweise kann der Fahrer angeben, dass er Routen mit weniger Energieverbrauch gegenüber schnelleren Routen bevorzugt oder umgekehrt, dass er kostenpflichtige Routstraßen wie Mautstraßen meiden will, dass er günstige Parkplätze, welche weiter von einem Ziel entfernt liegen, gegenüber teuren Parkplätzen nahe am Ziel bevorzugt oder umgekehrt etc. Die Gewichtung der Kriterien, d.h. die Präferenz, kann vom Fahrer direkt eingegeben werden oder indirekt z.B. aus so genannten vom Fahrer bearbeiteten Travel Choice Experimenten abgeleitet werden, oder auch aus einem Fahrverhalten bzw. Reiseverhalten des Fahrers abgeleitet werden. Travel Choice Experimente sind dabei eine Methodik zur quantitativen Bestimmung eines Gewichtungsvektors von Nutzerpräferenzen. Probanden (z.B. ein Nutzer wie ein Fahrer eines Fahrzeugs) werden mit alternativen Entscheidungen konfrontiert. Die Entscheidungsalternativen unterscheiden sich in ihrer Parameterausprägung. Die Probanden müssen sich für eine Alternative entscheiden. Die Entscheidung der Probanden wird aufgezeichnet. Aus den Parameterausprägungen und den aufgezeichneten Probandenentscheidungen werden z.B. mittels Multinomialer Logit Modelle Gewichtungsparameter errechnet, welche im vorliegenden Fall die oben erwähnte Präferenz des Nutzers beschreiben.

Bei 23 wird dann in dem Fahrzeug oder der dem Fahrzeug zugeordneten Vorrichtung, beispielsweise mittels der Recheneinrichtung 12 der Fig. 1, eine Routenempfehlung in Abhängigkeit von der eingegebenen Präferenz und den übermittelten Marktpreisen bestimmt.

Zu bemerken ist, dass die verschiedenen Vorgänge der Fig. 2 nicht notwendigerweise in der dargestellten Reihenfolge durchgeführt werden müssen. Beispielsweise kann die Präferenz auch eingegeben werden, bevor die Marktpreise an das Fahrzeug übermittelt werden. Beispielsweise kann ein Nutzer seine Präferenzen auch einmalig eingeben, wobei diese Präferenzen dann in dem Fahrzeug gespeichert werden und gültig bleiben, solange der Fahrer seine Präferenzen nicht ändert. Das Bestimmen der Marktpreise für Ressourcen in der Serveranordnung kann beispielsweise fortlaufend geschehen, so dass die Marktpreise laufend aktualisiert werden, insbesondere einer Nachfrage angepasst werden, wobei die Nachfrage auch eine Nachfrageprognose darstellen kann. Die Marktpreise können für den aktuellen Zeitpunkt oder einen in der Zukunft liegenden Zeitpunkt bereitgestellt werden.

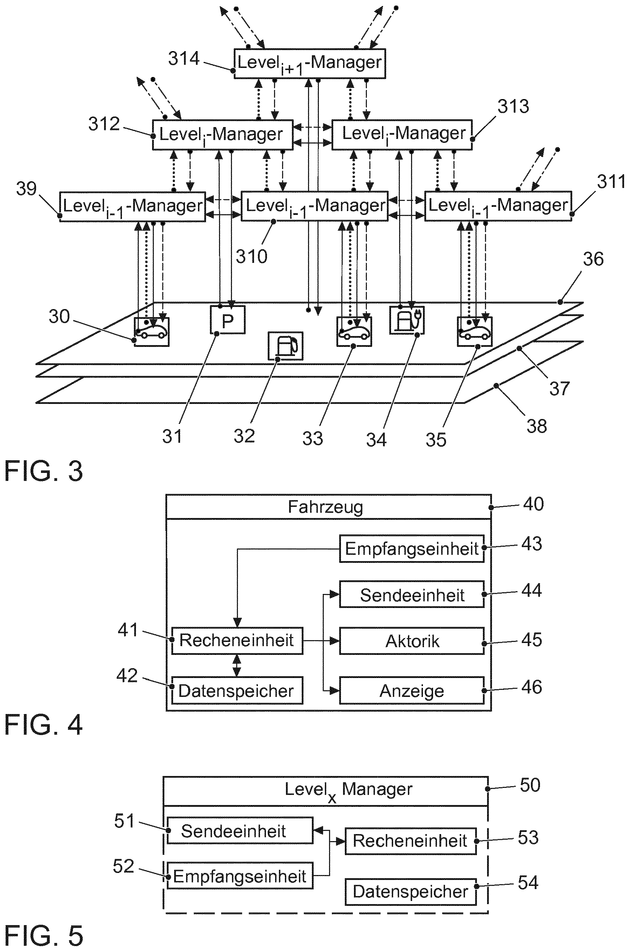

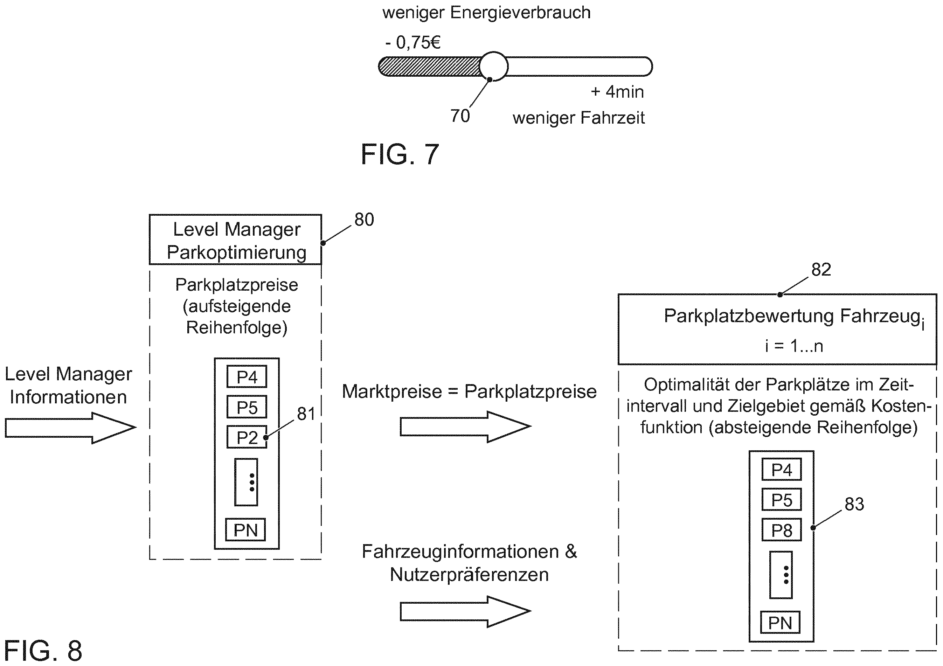

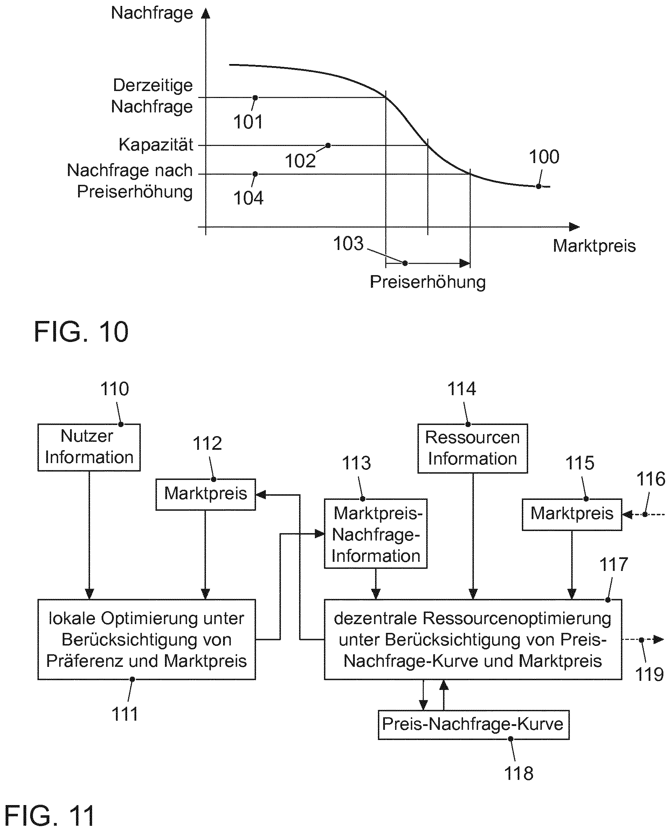

Im Folgenden werden nunmehr unter Bezugnahme auf die Fig. 3-11 weitere Ausführungsbeispiele beschrieben, welche konkretere Implementierungsmöglichkeiten der Ausführungsbeispiele der Fig. 1 und 2 beschreiben sowie Möglichkeiten zur Implementierung der verschiedenen Verfahrensschritte der Fig. 2 näher erläutern. In Fig. 3 ist dabei ein Blockdiagramm eines Systems zur Mobilitätssteuerung gemäß einem Ausführungsbeispiel dargestellt. Einzelne Komponenten des Systems sowie die Kommunikation der Komponenten untereinander werden unter Bezugnahme auf die Fig. 4-6 näher erläutert. Die Fig. 7-9 zeigen schließlich Beispiele für besondere Anwendungsfälle. Die Fig. 10 und 11 erläutern die nachfragebasierte Bestimmung von Marktpreisen und ein entsprechendes weiteres Ausführungsbeispiel.

Das System der Fig. 3 umfasst als eine Serveranordnung eine Vielzahl von sogenannten Levelmanagern 39 und 310-314, welche hierarchisch in Ebenen angeordnet sind. Beispielsweise bilden die Levelmanager 39, 310, 311 eine erste Ebene (Ebene i-1), die Levelmanager 312 und 313 bilden eine zweite Ebene (Ebene i) und der Levelmanager 314 bildet eine dritte Ebene (Ebene i+1). Je nach Bedarf können weitere Ebenen oder weniger Ebenen vorhanden sein. Die Anzahl von Levelmanagern in jeder Ebene kann ebenfalls variieren. Die Zuordnung von Levelmanagern kann sich thematisch, zeitlich und/oder örtlich unterscheiden. Verschiedene Levelmanager können beispielsweise für verschiedene Arten von Mobilitätsressourcen und/oder für verschiedene geographische Gebiete zuständig sein. Die verschiedenen Levelmanager kommunizieren miteinander und mit weiteren Einrichtungen. Dabei deuten in Fig. 3 Pfeile mit durchgezogenen Linien einen Austausch mit einem physikalischen Netzwerk an, d.h. ein Erhalten und Weitergeben von Informationen über ein Netzwerk wie ein Straßennetzwerk oder ein Energienetzwerk. Gestrichelte Pfeile deuten einen Austausch von Marktpreisen an, und gepunktete Pfeile deuten einen optionalen Austausch von Informationen an, über die beispielsweise von Fahrzeugen 30, 33, 35 Entscheidungen über eine erfolgte Routenwahl oder eine erfolgte Parkplatzbuchung oder Nachfrageinformationen mitgeteilt werden können. Pfeile mit Strichpunktlinien deuten eine optional mögliche Kommunikation mit weiteren (nicht dargestellten) Komponenten an.

Bei dem dargestellten Ausführungsbeispiel können beispielsweise die Levelmanager 39, 310, 311 der untersten Ebene jeweils für ein bestimmtes geographisches Gebiet zuständig sein und für dieses Gebiet Marktpreise bestimmen und/oder von Levelmanagern höherer Ebene erhalten und diese Marktpreise an Fahrzeuge 30, 33 bzw. 35 in ihrem jeweiligen Gebiet übermitteln. Der Levelmanager 312 der zweiten Ebene kann beispielsweise Informationen über Verfügbarkeit und Preise von Parkplätzen 31 in einem bestimmten Gebiet sammeln und hieraus entweder Marktpreise bestimmen oder die entsprechenden Informationen an die Levelmanager 39, 310, 311 der ersten Ebene weitergeben, so dass diese Marktpreise bestimmen können. In ähnlicher Weise kann der Levelmanager 313 beispielsweise Informationen hinsichtlich Preisen und Belegung von Ladesäulen 34 für Elektrofahrzeuge sammeln und auf Basis der erhaltenen Informationen Marktpreise festlegen oder die entsprechenden Informationen an andere Levelmanager zu Bestimmung von Marktpreisen weitergeben. In ähnlicher Weise kann ein Levelmanager Informationen hinsichtlich herkömmlicher Tankstellen 32 sammeln. Der Levelmanager 314 sammelt schließlich netzwerkbezogene Informationen beispielsweise über ein Straßennetzwerk 36 oder ein Energienetzwerk 37, beispielsweise von Verkehrsleitstellen oder anderen Anbietern, welche Informationen hinsichtlich der Auslastung von Verkehrswegen wie Straßen zur Verfügung stellen, oder Energienetzbetreibern im Falle des Energienetzwerks 37, und bestimmt hieraus wiederum entsprechende Marktpreise für die entsprechenden Mobilitätsressourcen. Zu bemerken ist, dass bei dem Ausführungsbeispiel der Fig. 3 Levelmanager einer höheren Ebene beispielsweise auch Marktpreise auf hoher Ebene, z.B. Gebietsmarktpreise, berechnen können, welche dann beispielsweise von den Levelmanagern 39, 310, 311 der ersten Ebene auf Basis lokaler Gegebenheiten, beispielsweise auf Basis von Fahrzeugen erhaltener Informationen, modifiziert oder neu berechnet werden können. Marktpreise höherer Ebenen können Parameter darstellen, die von Levelmanagern untergeordneter Ebenen zur Berechnung von Marktpreisen verwendet werden.

Zudem können auch die Fahrzeuge 30, 33 und 35 bei entsprechender Ausrüstung relevante Informationen zur Bestimmung von Marktpreisen an die Levelmanager 39, 310 bzw. 311 übermitteln. Die Fahrzeuge 30, 33 und 35 interagieren physikalisch beispielsweise mit dem Straßennetzwerk, wie dies durch eine Ebene 38 der physikalischen Interaktion angedeutet ist, und können sich hieraus ergebende Informationen übermitteln. Beispielsweise können die Fahrzeuge Informationen hinsichtlich Stauungen übermitteln, oder bei einer entsprechenden Anzahl von ausgerüsteten Fahrzeugen kann die Anzahl von Fahrzeugen selbst eine Information hinsichtlich der Auslastung darstellen.

Die Fahrzeuge und die Levelmanager kommunizieren über Informations- und Kommunikationstechnologienetzwerke, wobei verschiedene Techniken wie Mobilfunknetzwerke, WLAN, drahtgebundene Netzwerke etc. zum Einsatz kommen können.

Zu bemerken ist, dass die Aufteilung der Levelmanager der Fig. 3 lediglich als Beispiel zu verstehen ist, und auch beispielsweise ein einziger Levelmanager mehrere der dargestellten Aufgaben wahrnehmen kann, so dass auch beispielsweise weniger Levelmanager oder weniger Ebenen von Levelmanagern vorhanden sein können.

Zu bemerken ist auch, dass manche Levelmanager auch dynamisch eingerichtet werden können. Beispielsweise kann eine Einrichtung in einem Fahrzeug als Levelmanager für einen gewissen räumlichen Bereich, beispielsweise als Levelmanager der ersten Ebene der Fig. 3, dienen, solange sich das Fahrzeug in diesem Bereich aufhält, und so das Fahrzeug selbst sowie andere Fahrzeuge in dem Bereich mit Marktpreisen versorgen.

Wie bereits unter Bezugnahme auf die Fig. 1 und 2 erläutert teilen die Levelmanager, beispielsweise die Levelmanager 39, 310,311 der ersten Ebene, den Fahrzeugen 30, 33, 35 auf Anforderung Marktpreise mit, welche die Fahrzeuge dann zusammen mit Präferenzen eines Nutzers zur Bestimmung einer Routenempfehlung verwenden. Ein Beispiel für eine entsprechende Vorrichtung 40 in einem Fahrzeug ist in Fig. 4 dargestellt. Die Vorrichtung 40 des Fahrzeugs umfasst dabei eine Recheneinheit 41, welche über eine Empfangseinheit 43 beispielsweise Marktpreise von den Levelmanagern empfangen kann und über eine Sendeeinheit 44 Informationen zu den Levelmanagern senden kann. Die Recheneinheit 41 ist mit einem Datenspeicher 42 gekoppelt. In dem Datenspeicher 42 können beispielsweise Präferenzen eines Nutzers hinterlegt sein, welche dieser eingestellt hat oder welche indirekt auf Grundlage seines Verhaltens automatisch berechnet worden sind. Die Recheneinheit 41 kann dann auf Basis der über die Empfangseinheit 43 empfangenen Marktpreise und auf Basis der Präferenzen eine Routenempfehlung zu einem von einem Nutzer gewünschten Ziel bestimmen und über eine Anzeige 46 ausgeben. Die Recheneinheit 41 kann auch weiteren Zwecken dienen, beispielsweise kann sie auf eine Aktorik 45, beispielsweise Getriebe, Motor etc. des Fahrzeugs einwirken und diese steuern. In anderen Worten kann die Recheneinheit bzw. die Vorrichtung 40 auch anderen Zwecken als zum Bestimmen von Routenempfehlungen dienen. Beispielsweise können Komponenten wie die Recheneinheit 41 Teil eines Infotainmentsystems oder einer Steuereinrichtung des Fahrzeugs sein.

Zu bemerken ist, dass bei manchen Ausführungsbeispielen die Vorrichtung 40 auch außerhalb des Fahrzeugs beispielsweise in einem dem jeweiligen Fahrzeug zugeordneten Fahrzeug-Backend implementiert sein kann, beispielsweise mittels einer sogenannten Back2Car-Kommunikation. Ein derartiges Fahrzeug-Backend stellt dabei eine dem Fahrzeug zugeordnete Vorrichtung dar.

In Fig. 5 ist ein Beispiel für die Implementierung eines Levelmanagers 50 gemäß einem Ausführungsbeispiel dargestellt. Der Levelmanager 50 kann beispielsweise eine Implementierung eines oder mehrerer der Levelmanager 39, 310 - 314 der Fig. 3 widerspiegeln. Es ist zu bemerken, dass die verschiedenen Levelmanager der Fig. 3 nicht alle auf die gleiche Art und Weise implementiert sein müssen, sondern beispielsweise verschiedene Hardwarekomponenten verwendet werden können.

Der Levelmanager 50 des Ausführungsbeispiels der Fig. 5 umfasst eine Sendeeinheit 51 und eine Empfangseinheit 52, um beispielsweise den unter Bezugnahme auf Fig. 3 beschriebenen Datenaustausch durchführen zu können.

Die Sendeeinheit 51 und die Empfangseinheit 52 sind mit einer Recheneinheit 53 verbunden, welche die Berechnung der Marktpreise durchführen kann. Marktpreise sowie Informationen, auf Basis derer die Marktpreise berechnet werden können, können ebenso wie andere Daten in einem der Recheneinheit 53 zugeordneten Datenspeicher 54 gespeichert werden.

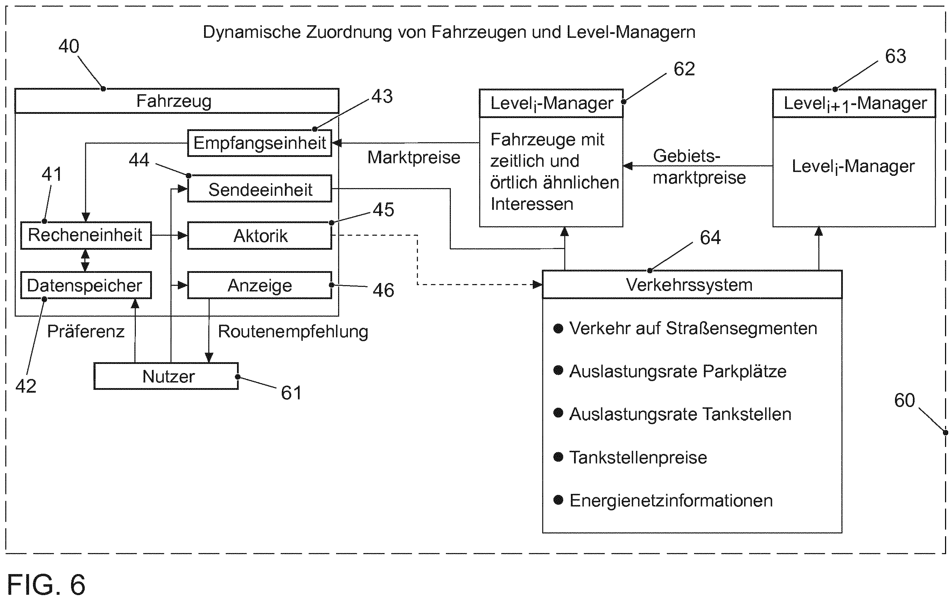

In Fig. 6 ist die unter Bezugnahme auf Fig. 3 beschriebene Interaktion zwischen Levelmanagern und Fahrzeug in einem System 60 nochmals detaillierter dargestellt. Dabei entspricht eine dargestellte Vorrichtung 40 in einem Fahrzeug der bereits unter Bezugnahme auf Fig. 4 diskutierten Vorrichtung und wird daher nicht näher erläutert. Für das System 60 der Fig. 6 sind ein Levelmanager 62 einer ersten Ebene und ein Levelmanager 63 einer zweiten Ebene dargestellt. Der Levelmanager 62 kann beispielsweise einem der Levelmanager 39, 310, 311 der Fig. 3 entsprechen, und die Vorrichtung 40 kann in ein entsprechendes Fahrzeug 30, 33 bzw. 35 eingebaut sein. Der Levelmanager 62 gibt Marktpreise an die Vorrichtung 40 oder allgemein an Fahrzeuge mit zeitlich, thematisch und/oder örtlich ähnlichen Interessen, beispielsweise Fahrzeuge in einem vorgegebenen Gebiet des Levelmanagers 62, weiter. Hierfür erhält der Levelmanager 62 beispielsweise von dem Levelmanager 63, welcher einem der Levelmanager 312, 313 entsprechen kann, Gebietsmarktpreise für ein größeres Gebiet. Der Levelmanager 62 berechnet auf Basis dieser Gebietsmarktpreise und gegebenenfalls lokaler Informationen dann die Marktpreise, die an die Vorrichtung 40 weitergegeben werden. Zur Berechnung der Marktpreise bzw. der Gebietsmarktpreise erhalten die Levelmanager 62, 63 Informationen über das Verkehrssystem 64, beispielsweise über Verkehr auf Straßensegmenten und Verkehrswegen, über eine Auslastungsrate von Parkplätzen, eine Auslastungsrate von Tankstellen, Tankstellenpreise, Energienetzinformationen andere Nachfrageinformationen und dergleichen, wie oben erläutert. Wie ebenfalls erläutert können die Levelmanager, insbesondere Levelmanager 62, auch Informationen von Fahrzeugen erhalten. Die Vorrichtung 40 empfängt zudem von einem Nutzer 61 eine Präferenz wie bereits erläutert und gibt dann über die Anzeige 46 eine Routenempfehlung an den Nutzer 61 aus.

Ein Beispiel für die direkte Eingabe einer derartigen Präferenz ist in Fig. 7 dargestellt. Hier kann mittels eines Schiebereglers 70, welcher beispielsweise ein physikalischer Schieberegler oder ein auf einem Touchscreen dargestellter Schieberegler sein kann, angegeben werden, ob dem Nutzer ein geringer Energieverbrauch oder eine niedrige Fahrtzeit wichtig ist, also eine Gewichtung zwischen entgegensetzten Kriterien der Kostenfunktion angegeben werden. Dabei kann wie in Fig. 7 angedeutet dem Nutzer eine Abschätzung mitgeteilt werden, wie sich die gegenwärtige Einstellung auf Kosten und Fahrtzeit auswirkt. Bei der in Fig. 7 dargestellten Position des Schiebereglers 70 wird beispielsweise mehr Wert auf Energieverbrauch gelegt, was in dem dargestellten Beispiel zu einer Kostenersparnis von geschätzt 0,75 Euro gegenüber beispielsweise einer mittleren Position des Schiebereglers und einer um 4 Minuten erhöhten prognostizierten Fahrtzeit führen würde. In gleicher Weise kann beispielsweise zwischen Kosten eines Parkplatzes und Entfernung eines Parkplatzes von einem gewünschten Ziel eine Gewichtung vorgenommen werden, oder zwischen Treibstoffkosten und einem Umweg, welcher nötig wäre, um zu einer jeweiligen Tankstelle oder Ladesäule zu fahren. Selbstverständlich sind auch andere Eingabemöglichkeiten als ein Schieberegler, z.B. eine Eingabe über Tasten oder einen Drehregler, möglich. Weiterhin ist eine indirekte Eingabe der Gewichtungen möglich, z.B. durch die Bearbeitung von Travel Choice Experimenten durch den Nutzer und die automatisierte Auswertung einer relativen Gewichtung der Kostenfunktionskriterien durch eine Recheneinheit.

Im Folgenden wird die Berechnung der Marktpreise sowie die Berechnung der Routenempfehlung noch etwas näher erläutert. Die Routenempfehlung beschreibt bei einem Ausführungsbeispiel für eine Reise eines Nutzers von einem Startort zu einem Zielort die optimale Kombination von Reiseentscheidungen. Reiseentscheidungen sind beispielsweise Parkplatzwahl, Wahl der Abfahrtszeit, Wahl einer Ladesäule oder Tankstelle, oder eine Wahl einer Route.. Das Optimierungsproblem zur Berechnung optimaler Reiseentscheidungen wird durch Optimierungsparameter beschrieben. Optimierungsparameter haben Ausprägungen. Die Menge der möglichen Ausprägungen wird als Wertemenge der Optimierungsparameter bezeichnet. Optimierungsparameter sind beispielweise der Energieverbrauch entlang einer Route, die Fahrtzeit entlang einer Route, die Kosten eines Parkplatzes oder die Energie- bzw. Spritpreise. Ein Lösungsraum für das Optimierungsproblem, d.h. eine Menge aller möglichen Lösungen, beschreibt alle Kombinationen dieser Optimierungsparameter, die vorgegebene Randbedingungen (soweit vorhanden), beispielsweise eine spätestmögliche Ankunftszeit am Zielpunkt oder eine Verfügbarkeit eines Parkplatzes, welche von dem Nutzer vorgegeben werden können oder auch systemseitig vorgegeben sein können, erfüllen. In anderen Worten beinhaltet der Lösungsraum alle möglichen Kombinationen von Route, bei Abfahren der Route anzufahrenden Ladesäulen oder Tankstellen, während der Route oder am Ende der Route anzufahrenden Parkplatz oder dergleichen, welche die Randbedingungen erfüllen. Mit Hilfe einer Kostenfunktion werden dann bei einem Ausführungsbeispiel Kosten für die Elemente des Lösungsraumes, d.h. die verschiedenen Kombinationen von Optimierungsparametern, berechnet. Die Kostenfunktion berücksichtigt dabei persönliche Präferenzen eines Nutzers, z.B. Fahrers, des Fahrzeugs, beispielsweise die Gewichtung von Fahrtzeit und Energieverbrauch oder Fußwegdistanz zu einem Ziel und Parkkosten, wie oben erläutert. Sie berücksichtigt weiterhin mindestens einen von einem Levelmanager oder einer anderen Serveranordnung erhaltenen Marktpreis für eine oder mehrere der Ressourcen, welche durch die Optimierungsparameter ausgedrückt werden können. Die Marktpreise können ebenso auf Basis einer Optimierungsaufgabe berechnet werden, was weiter unten näher erläutert wird.

Zunächst wird nun die Optimierung der Reiseentscheidung einzelner Nutzer, d.h. die Bestimmung der Routenempfehlung gemäß einem Ausführungsbeispiel diskutiert. Wie bereits erläutert kann der Nutzer dabei über eine Nutzerschnittstelle einige oder mehrere Präferenzen einstellen. Zur Bestimmung der Routenempfehlung kann dann bei einem Ausführungsbeispiel eine Kostenfunktion der folgenden Art verwendet werden:

$$Kosten = \sum_{k=0}^{n} \alpha_k f_k$$

wobei n die Anzahl der Kostenfunktionsterme beschreibt, die $\alpha_k$ konstante Gewichtungsterme sind und $f_k$ beliebige Funktionen sind. Die Parameter des Optimierungsproblems sind dabei einzelne oder mehrere gewichtete Optimierungsparameter der Reiseplanung wie oben erläutert. Die Lösung des Optimierungsproblems beschreibt die präferierte Entscheidung des Nutzers bezüglich einer oder mehrerer Entscheidungsdimensionen, beispielsweise Parkplatzwahl, Routenwahl oder Ladensäulenwahl. Die gewichteten Kostenfunktionsterme $\alpha_k f_k$ beschreiben dann entsprechend zum Beispiel gewichtete Parkkosten in Abhängigkeit von der Parkplatzwahl,

gewichtete Fahrtzeit und Fahrtkosten für eine bestimmte Route, gewichtete Ladekosten, oder eine gewichtete Fußwegentfernung von einem gewählten Parkplatz zu einem Ziel. Somit können die möglichen Lösungen des oben erwähnten Lösungsraums, welche durch alle möglichen Kombinationen der Optimierungsparameter beschrieben werden, mittels herkömmlicher Verfahren berechnet und bezüglich ihrer Kosten bewertet werden. Mindestens ein Optimierungsparameter des Optimierungsproblems wird über Marktpreise beeinflusst. Beispielsweise können gewisse Routen Marktpreise je nach Auslastung aufweisen, oder Parkplätze können Marktpreise je nach Auslastung des Parkplatzes oder Kosten des Parkplatzes aufweisen. Die optimale Lösung, d.h. die bestimmte Routenempfehlung, kann durch Minimierung bzw. Maximierung der obigen Kostenfunktion erhalten werden. Dies entspricht dann einer Route mit maximal hoher Erfüllung der Präferenzen des Nutzers unter Berücksichtigung der Marktpreise. Auf diese Weise werden bei der errechneten Routenempfehlung sowohl die Bedürfnisse des Nutzers als auch die globale Sicht, d.h. der Wunsch, vorhandene Ressourcen möglichst gut auszunutzen, erfüllt.

In ähnlicher Weise können die Marktpreise durch eine Optimierung von Ressourcenkosten durch den oder die Levelmanager oder andere Serveranordnungen ermittelt werden. Auch hier kann eine Kostenfunktion der Art

$$Kosten = \sum_{k=0}^{n} \alpha_k f_k$$

verwendet werden, wobei n wiederum eine Anzahl von Kostenfunktionstermen beschreibt, $\alpha$ ein konstanter Gewichtungsterm ist und f eine beliebige Funktion beschreibt.

Die Optimierungsparameter dieses Optimierungsproblems sind dabei einzelne oder mehrere Marktpreise wie Parkkosten oder Ladekosten und mögliche weitere Parameter von Fahrzeugen oder anderen Levelmanagern, beispielsweise die unter Bezugnahme auf Fig. 6 erwähnten Gebietsmarktpreise, welche von einem Levelmanager einer höheren Ebene erhalten werden.

Die Kostenfunktionsterme beschreiben gewichtete Ressourcenkosten wie beispielsweise eine Parkplatzausrüstung (beispielsweise gekennzeichnet durch eine Anzahl von Parkplatznachfragen pro Parkplatz und Zeiteinheit) oder eine gewichtete Straßenauslastung (beispielsweise die Anzahl von Fahrzeugen pro Straßensegment und Zeiteinheit). Bei Parkplätzen können beispielsweise neben den Parkplatznachfragen auch die Parkgebühren als weiterer Kostenfunktionsterm eingehen, um einen Marktpreis für einen bestimmten Parkplatz zu berechnen. Auch für Straßen können beispielsweise Straßengebühren wie Mautgebühren zusätzlich zu einer Straßenauslastung als Kostenfunktionsterm eingehen. Es können auch zur Berechnung eines Marktpreises verschiedene Parameter wie Parkplatzausrüstung und Straßenauslastung kombiniert werden, beispielsweise um sowohl Auslastung von Parkplätzen als auch die Auslastung von Zufahrtsstraßen zum jeweiligen Parkplatz zu berücksichtigen. Der Lösungsraum wird wiederum durch alle möglichen Kombinationen der Optimierungsparameter beschrieben, wobei Lösungen wiederum mittels herkömmlicher Verfahren berechnet und bezüglich ihrer Kosten bewertet werden können. Eine optimale Lösung minimiert bzw. maximiert wiederum die oben angegebene Kostenfunktion, die so optimierten Kosten entsprechen dann beispielsweise einem Marktpreis, welcher beispielsweise zu einer guten Koordination von Angebot und Nachfrage beiträgt.

Durch eine derartige Herangehensweise kann also über die Marktpreise eine Ressourcenverfügbarkeit der Verkehrsinfrastruktur berücksichtigt werden, beispielsweise ob die Ressourcenverfügbarkeit örtlich und/oder temporär geringer als eine Nachfrage ist (in diesem Fall steigen die Marktpreise) oder niedriger als die Nachfrage ist (in diesem Fall fallen die Marktpreise), um den Verkehr möglichst so zu lenken, dass Staus, Parkplatzmängel etc. verhindert oder verringert werden, um so die Reisequalität von Nutzern des Systems zu verbessern. Dabei wird wie oben beschrieben eine dezentrale Lösung eingesetzt, wobei Marktpreise durch eine Serveranordnung, welche aus mehreren verteilten Einheiten bestehen kann, erzeugt werden und die individuelle Reiseplanung, d.h. das Berechnen der Routenempfehlung auf Ebene des Fahrzeugs unter Berücksichtigung von Präferenzen eines Nutzers sowie der Marktpreise erfolgt.

Mit derartigen Systemen kann insbesondere eine optimierte Reisequalität einzelner Fahrer bezüglich ihrer jeweiligen Kostenfunktion erreicht werden und Verkehrsrahmenbedingungen verbessert werden, wobei das Netzwerk, welches in Fig. 3 dargestellt wird, vergleichsweise gering belastet wird, da in den Levelmanagern nur die Marktpreise bestimmt werden und die eigentliche Bestimmung der Routenempfehlung sowie die Berücksichtigung der Präferenzen in dem Fahrzeug oder einer dem Fahrzeug zugeordneten Vorrichtung, beispielsweise einem Backend, vonstatten geht.

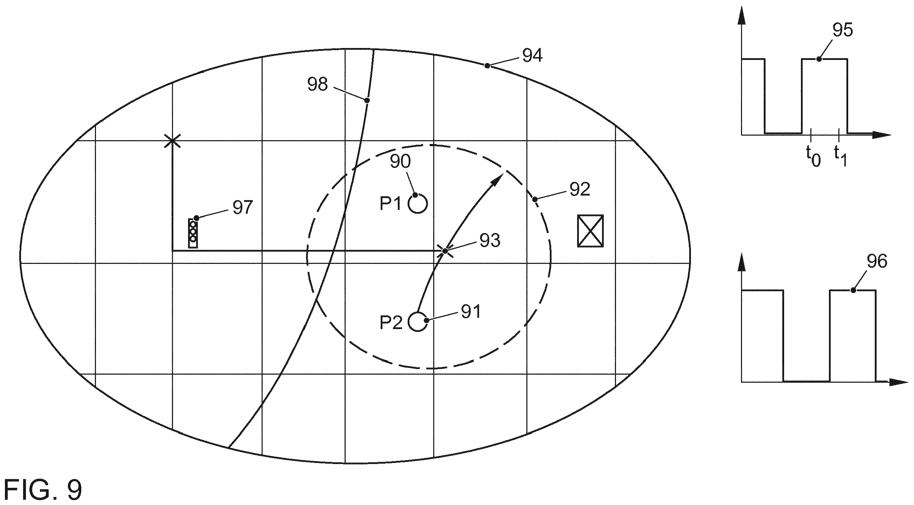

Des Weiteren werden nun unter Bezugnahme auf die Fig. 8 und 9 Beispiele für die Funktionsweise von Ausführungsbeispielen bei einer Parkoptimierung, d.h. bei einem Leiten zu einem optimalen Parkplatz, diskutiert.

In Fig. 8 erhält beispielsweise ein Levelmanager 80 zur Parkoptimierung Informationen hinsichtlich Parkplätzen, beispielsweise Parkgebühren oder Belegung der Parkplätze, und bestimmt hieraus Parkplatzpreise (Marktpreise) 81, welche in aufsteigender Reihenfolge dargestellt sind, d.h. P4 ist in dem dargestellten Beispiel der günstigste Parkplatz, beispielsweise aufgrund niedriger Parkgebühren und/oder vieler freier Parkplätze, während PN der ungünstigste Parkplatz ist. Diese Parkplatzpreise werden als Marktpreise einer einem Fahrzeug zugeordneten Vorrichtung 82 mitgeteilt. Die Vorrichtung 82 erhält zudem Fahrzeuginformationen, beispielsweise einen gewünschten Zielpunkt, und Nutzerpräferenzen. Daraus wird mit Hilfe der oben genannten Kostenfunktion eine Reihenfolge der Optimalität der Parkplätze bestimmt, welche in Fig. 8 mit 83 bezeichnet ist. In diesem Beispiel wird beispielsweise der Parkplatz P5 als optimaler bewertet als der Parkplatz P4, obwohl der Parkplatz P4 einen geringeren Marktpreis aufweist. Dies kann beispielsweise daran liegen, dass der Nutzer nicht zu weit laufen möchte und der Parkplatz P5 näher an dem gewünschten Ziel liegt. Für einen anderen Nutzer kann die Reihenfolge der Parkplätze wieder anders aussehen, wobei für ähnliche Ziele tendenziell wegen der Marktpreise die Parkplätze P4 und P5 häufiger als optimal bewertet werden dürften als beispielsweise der Parkplatz PN, welcher den höchsten Marktpreis aufweist.

In Fig. 9 ist als weiteres Beispiel eine Situation mit zwei Parkplätzen 90 (auch als P1 bezeichnet) und 91 (auch als P2 bezeichnet) dargestellt, welche sich beide in einem Gebiet 92 um ein gewünschtes Ziel 93 befinden und sich in einem größeren Gebiet 94 befinden. Eine Grenze zu einem anderen Teil des größeren Gebietes 94 ist mit 98 bezeichnet. Mit 97 ist eine Ampel, insbesondere eine variabel steuerbare Ampel, auf einem Zufahrtsweg zu den Parkplätzen 90 und 91 bezeichnet.

Eine Kurve 95 zeigt eine Belegung des Parkplatzes 90, und eine Kurve 96 zeigt eine Belegung des Parkplatzes 91. Somit sind die Parkplätze zu verschiedenen Zeiten stärker oder weniger stark belegt. Entsprechend der Auslastung können die Marktpreise der Parkplätze 90 und 91 mit der Zeit variieren. Ein erster Levelmanager kann beispielsweise für die Festlegung von Marktpreisen für die Parkplätze 90 und 91 zuständig sein. Ein weiterer Levelmanager kann die Auslastung von Zufahrtsstraßen zu den Parkplätzen 90 und 91 überwachen und Marktpreise für diese festlegen, beispielsweise eine Zufahrtsstraße, an der die Ampel 97 liegt. Der weitere Levelmanager kann dabei beispielsweise auch die Ampel 97 steuern, z.B. bei hoher Auslastung der Zufahrtsstraße länger auf rot schalten (was z.B. gleichzeitig mit einer Erhöhung des Marktpreises für die Zufahrtsstraße verbunden sein kann). Bei einem niedrigen Marktpreis der Zufahrtsstraße und einem niedrigen Marktpreis des Parkplatzes 90 kann dann beispielsweise eine Routenempfehlung lauten, den Parkplatz 90 über die Zufahrtsstraße bei der Ampel 97 anzufahren, während bei höheren Marktpreisen für die Zufahrtsstraße und den Parkplatz 90 eine Routenempfehlung beispielsweise lauten kann, den Parkplatz 91 über einen Umweg, der nicht über die Ampel 97 führt, anzufahren. Bei anderen Präferenzen eines Fahrers kann eine Routenempfehlung auch lauten, andere, ggfs. kostengünstigere Parkplätze in dem Gebiet jenseits der Grenze 98 anzufahren.

Zu bemerken ist, dass die Fig. 8 und 9 nur als Beispiel zum besseren Verständnis der dargestellten Ausführungsbeispiele dienen und nicht als einschränkend auszulegen sind. Wie bereits erläutert ist die Anwendung der Ausführungsbeispiele nicht auf Parkplatzsuche beschränkt und insbesondere können verschiedene Gesichtspunkte einer Reiseplanung wie Streckenwahl, Parkplatzwahl etc. kombiniert berücksichtigt werden, aber auch einzeln behandelt werden.

Schließlich wird nunmehr unter Bezugnahme auf die Fig. 10 und 11 die Bestimmung von Marktpreisen in Abhängigkeit von einer Nachfrage sowie die Optimierung der Nutzung von Mobilitätsressourcen unter Berücksichtigung derartig bestimmter Marktpreise noch näher erläutert.

In Fig. 10 zeigt eine Kurve 100 ein Beispiel für eine Abhängigkeit einer Nachfrage nach einer Mobilitätsressource von einem Marktpreis. Wie durch die Kurve 100 veranschaulicht sinkt die Nachfrage mit steigendem Marktpreis. Ein Schnittpunkt der Kurve 100 mit einer senkrechten Linie 102 bezeichnet als Beispiel eine Kapazität der Mobilitätsressource, beispielsweise eine Aufnahmefähigkeit einer Straße ohne Staubildung oder eine Anzahl von Parkplätzen oder Ladestationen bzw. Zapfsäulen einer Tankstelle. Weiter ist in Fig. 10 eine senkrechte Linie 101 eingezeichnet, die als Beispiel einen derzeitigen Marktpreis und im Schnittpunkt mit der Kurve 100 eine entsprechend derzeitige Nachfrage bezeichnet. In dem dargestellten Beispiel liegt die derzeitige Nachfrage über der Kapazität der Mobilitätsressource. Daher wird bei einem Ausführungsbeispiel, wie durch einen Pfeil 103 angedeutet, eine Preiserhöhung des Marktpreises auf einen neuen Preis, welcher durch eine senkrechte Linie 104 gekennzeichnet ist, durchgeführt. Hierdurch sinkt die Nachfrage nach der Mobilitätsressource derart, dass die Kapazität der Mobilitätsressource ausreichend ist, um die Nachfrage zu bedienen. Somit kann auf diese Weise beispielsweise eine Steuerung von Verkehrsströmen erreicht werden. Es ist zu erwähnen, dass die Nachfrage einer aktuellen Nachfrage entsprechen kann oder eine prognostizierte Nachfrage zu einer in der Zukunft liegenden Zeit darstellen kann. Es ist weiterhin zu erwähnen, dass die Kurve 100 auf Basis beschriebener Fahrzeuginformationen, wie einer Nachfrageinformation und gegebenenfalls einem zusätzlichen Preis-Parameter, ermittelt werden kann oder auf Basis von historischen Informationen gelernt sein kann oder mittels Simulation errechnet sein kann.

Wie bereits erläutert können bei Ausführungsbeispielen Fahrzeuge Nachfrageinformationen zu der Serveranordnung senden, wobei die Nachfrageinformationen einen maximal akzeptablen Preis als zusätzlichen Preis-Parameter beinhalten können. In Ausführungsbeispielen, in denen die Serveranordnung derartige Informationen zur Verfügung hat, kann der Marktpreis auf Basis der maximal akzeptablen Preise von nachfragenden Fahrzeugen relativ exakt angepasst werden, so dass eine möglichst optimale Auslastung der Mobilitätsressource erzielt wird. In anderen Fällen kann die Preiserhöhung beispielsweise auf Basis von Erfahrungswerten oder schrittweise erfolgen, um sich einer möglichst optimalen Auslastung anzunähern.

In Fig. 11 wird die Funktionsweise von Ausführungsbeispielen unter Berücksichtigung einer Preis-Nachfrage-Kurve wie der Kurve 100 in Fig. 10 näher erläutert.

Wie bereits für die vorherigen Ausführungsbeispiele erläutert findet dabei zum einen eine Ressourcenoptimierung, beispielsweise durch dezentrale Server, statt, bei welchen ein Marktpreis festgelegt wird. Dies ist in Fig. 11 durch einen Block 117 dargestellt. Zum anderen findet eine lokale Optimierung unter Berücksichtigung von Präferenzen des Fahrers statt, beispielsweise in dem Fahrzeug oder in einer dem Fahrzeug zugeordneten externen Vorrichtung. Diese lokale Optimierung ist in Fig. 11 durch einen Block 111 repräsentiert.

Die lokale Optimierung erfolgt dabei wie bereits erläutert basierend auf einem Marktpreis 112 und Nutzerinformationen 110, insbesondere Informationen hinsichtlich Präferenzen des Benutzers, beispielsweise eines Fahrers.

Zudem werden von dem Fahrzeug oder einer dem Fahrzeug zugeordneten externen Vorrichtung Marktpreis-Nachfrageinformationen 113 an die Serveranordnung geschickt. Beispielsweise können wie unter Bezugnahme auf Fig. 10 erläutert diese Informationen zum einen Informationen hinsichtlich der Nachfrage nach bestimmten Mobilitätsressourcen und zum anderen Informationen hinsichtlich eines maximal akzeptierten Preises für die Mobilitätsressourcen umfassen.

Die Serveranordnung adaptiert dann Marktpreise basierend auf den Informationen 113, basierend auf Ressourceninformationen 114, beispielsweise Informationen über Kapazität oder Parkplatzpreise, Informationen über Auslastung von Verkehrswegen etc., und/oder basierend auf einem bisherigen Marktpreis oder einem Gebietsmarktpreis 115, welcher wie durch einen Pfeil 116 angeordnet von einer Serveranordnung einer höheren Ebene (vgl. Fig. 3) erhalten werden kann. Zudem dient bei dem Ausführungsbeispiel der Fig. 11 eine Preis-Nachfrage-Kurve 118 (beispielsweise die Kurve 100 der Fig. 10) als Grundlage für die Anpassung und Festlegung von Marktpreisen. Auf diese Weise kann in der Serveranordnung wie durch den Block 117 angeordnet die "globale" Sicht berücksichtigt werden, d.h. auf eine möglichst optimale Ressourcenausnutzung hin gearbeitet werden, während in dem Fahrzeug oder einer dem Fahrzeug zugeordneten Vorrichtung wie durch den Block 111 angedeutet die lokalen Bedürfnisse des Fahrers berücksichtigt werden können. Ein Pfeil 119 deutet an, dass Informationen von Block 117 auch an weitere Einrichtungen, z.B. Serveranordnungen einer höheren Ebene, weitergegeben werden kann.

Zu bemerken ist, dass die hier diskutierten Konzepte und Herangehensweisen nicht nur auf Mobilitätssysteme anwendbar sind, sondern generell in Fällen anwendbar sind, in denen zum Einen globale Interessen berücksichtigt werden müssen und zum Anderen lokale Präferenzen eine Rolle spielen. Ein Beispiel hierfür sind Blockheizkraftwerke, wo globale Interessen der Energieversorger ebenso wie lokale Interessen der einzelnen Blockheizkraftwerkbetreiber oder Blockkraftwerke selber (beispielsweise Überhitzung) zu berücksichtigen sind.

**Bezugszeichenliste**

| | |
|---|---|
| 10 | Fahrzeug |
| 11 | Vorrichtung |
| 12 | Recheneinrichtung |
| 13 | Benutzerschnittstelle |
| 14 | Kommunikationsschnittstelle |
| 15 | Kommunikation |
| 16 | zentrale Serveranordnung |
| 17 | Kommunikationsschnittstelle |
| 18 | Kommunikation |
| 20-23 | Verfahrensschritte |
| 30 | Fahrzeug |
| 31 | Parkplätze |
| 32 | Tankstellen |
| 33 | Fahrzeug |
| 34 | Ladesäulen |
| 35 | Fahrzeug |
| 36 | Straßennetzwerk |
| 37 | Energienetz |
| 38 | Ebene der physikalischen Interaktion |
| 39-314 | Levelmanager |
| 40 | Vorrichtung |
| 41 | Recheneinheit |
| 42 | Datenspeicher |
| 43 | Empfangseinheit |
| 44 | Sendeeinheit |
| 45 | Aktorik |
| 46 | Anzeige |
| 50 | Levelmanager |
| 51 | Sendeeinheit |
| 52 | Empfangseinheit |
| 53 | Recheneinheit |
| 54 | Datenspeicher |
| 60 | System |
| 61 | Nutzer |
| 62 | Levelmanager |
| 63 | Levelmanager |
| 64 | Verkehrssystem |
| 70 | Schieberegler |
| 80 | Levelmanager Parkoptimierung |
| 82 | Parkplatzbewertung im Fahrzeug |
| 90 | Parkplatz |
| 91 | Parkplatz |
| 92 | Bereich |
| 93 | Ziel |
| 94 | Bereich |
| 95 | Parkplatzverfügbarkeit |
| 96 | Parkplatzverfügbarkeit |
| 97 | Ampel |
| 98 | Bereichsgrenze |
| 100 | Preis-Nachfrage-Kurve |
| 101 | Derzeitige Nachfrage |
| 102 | Kapazität |
| 103 | Preiserhöhung |
| 104 | Nachfrage nach Preiserhöhung |
| 110 | Nutzerinformation |
| 111 | Lokale Optimierung |
| 112 | Marktpreis |
| 113 | Marktpreisnachfrageinformation |
| 114 | Ressourceninformation |
| 115 | Marktpreis |
| 116 | Pfeil |
| 117 | Dezentrale Ressourcenoptimierung |
| 118 | Preis-Nachfrage-Kurve |

**Patentansprüche**

1. Verfahren zur Mobilitätssteuerung, umfassend:

 Bestimmen von Marktpreisen für Mobilitätsressourcen in einer Serveranordnung (16; 39-314; 62, 63) in Abhängigkeit von einer Nachfrage nach den Mobilitätsressourcen, wobei die Serveranordnung von mehreren Fahrzeugen Nachfrageinformationen empfängt,
 wobei sich die Nachfrageinformationen auf eine Nachfrage nach einer bestimmten Mobilitätsressource der Mobilitätsressourcen beziehen, Empfangen von mindestens einem der Marktpreise von der Serveranordnung (16; 39-314; 62, 63) in einer einem Fahrzeug (10; 30, 33, 35) zugeordneten Vorrichtung (11; 40), Festlegen einer Präferenz durch einen Nutzer (61) des Fahrzeugs (10; 30, 33, 35), und Bestimmen einer Routenempfehlung auf Basis des mindestens einen empfangenen Marktpreises und der Präferenz in der dem Fahrzeug (10; 30, 33, 35) zugeordneten Vorrichtung (11; 40).

2. Verfahren nach Anspruch 1, **dadurch gekennzeichnet, dass** das Bestimmen der Marktpreise ein Bestimmen der Marktpreise in Abhängigkeit von einer Auslastung der Mobilitätsressourcen umfasst.

3. Verfahren nach Anspruch 1 oder 2, **dadurch gekennzeichnet, dass** das Bestimmen der Marktpreise ein Bestimmen der Marktpreise in Abhängigkeit von Kosten der Mobilitätsressourcen umfasst.

4. Verfahren nach einem der Ansprüche 1-3, **dadurch gekennzeichnet, dass** die Mobilitätsressourcen eine oder mehrere Ressourcen umfassen ausgewählt aus der Gruppe bestehend aus: Verkehrswegen, Verkehrswegsegmenten, Parkplätzen, Tankstellen und Ladesäulen.

5. Verfahren nach einem der Ansprüche 1-4, **dadurch gekennzeichnet, dass** das Bestimmen der Routenempfehlung auf Basis von Marktpreisen für mindestens zwei verschiedene Arten von Mobilitätsressourcen erfolgt.

**6.** Verfahren nach einem der Ansprüche 1-5, **dadurch gekennzeichnet, dass** das Festlegen einer Präferenz eine Gewichtung von Optimierungsparametern umfasst.

**7.** Verfahren nach einem der Ansprüche 1-6, weiter umfassend Empfangen von Informationen über die Mobilitätsressourcen durch den Server, wobei das Bestimmen von Marktpreisen ein Bestimmen der Marktpreise auf Basis der empfangenen Informationen umfasst.

**8.** Verfahren nach einem der Ansprüche 1-7, **dadurch gekennzeichnet, dass** die dem Fahrzeug zugeordnete Vorrichtung (11; 40) in dem Fahrzeug (10; 30, 33, 35) angeordnet ist.

**9.** Vorrichtung (11; 40) für ein Fahrzeug, umfassend:

eine Kommunikationsschnittstelle (14; 43, 44) zum Senden einer Nachfrageinformation an eine Serveranordnung und zum Empfangen von mindestens einem von der Nachfrageinformation abhängigen Marktpreis einer Mobilitätsressource von der Serveranordnung, wobei die Serveranordnung von mehreren Fahrzeugen Nachfrageinformationen empfängt, wobei sich die Nachfrageinformationen auf eine Nachfrage nach einer bestimmten Mobilitätsressource der Mobilitätsressourcen beziehen, eine Benutzerschnittstelle (13) zum Empfangen einer Präferenz durch einen Benutzer, und eine Recheneinrichtung zum Bestimmen einer Routenempfehlung auf Basis des mindestens einen empfangenen Marktpreises und der empfangenen Präferenz.

**10.** Vorrichtung nach Anspruch 9, **dadurch gekennzeichnet, dass** die Vorrichtung (11; 40) ein Navigationssystem und/oder ein Infotainmentsystem für das Fahrzeug (10; 30, 33, 35) umfasst.

**11.** Vorrichtung (11; 40) nach Anspruch 9 oder 10, **dadurch gekennzeichnet, dass** die Vorrichtung zum Senden von Informationen hinsichtlich mindestens einer Mobilitätsressource an die Serveranordnung (16; 39-314; 62, 63) eingerichtet ist.

**12.** Vorrichtung nach einem der Ansprüche 9-11, **dadurch gekennzeichnet, dass** die Nachfrageinformation eine Information hinsichtlich eines maximal akzeptierten Preises umfasst.

**13.** Serveranordnung (16; 39-314; 62, 63), umfassend:

eine Kommunikationsschnittstelle (17; 51, 52) zum Empfangen von Informationen über Mobilitätsressourcen umfassend Informationen hinsichtlich einer Nachfrage nach den Mobilitätsressourcen und zum Senden von Marktpreisen für Mobilitätsressourcen an Fahrzeugen zugeordnete Vorrichtungen (11; 40), und eine Recheneinrichtung (53) zum Berechnen der Marktpreise auf Basis der Informationen, wobei die Serveranordnung von mehreren Fahrzeugen Nachfrageinformationen empfängt, wobei sich die Nachfrageinformationen auf eine Nachfrage nach einer bestimmten Mobilitätsressource der Mobilitätsressourcen beziehen.

**14.** Serveranordnung nach Anspruch 13, **dadurch gekennzeichnet, dass** die Informationen über Mobilitätsressourcen Informationen über von Verkehrsteilnehmern maximal akzeptierte Preise für die Mobilitätsressourcen umfassen.

**Claims**

**1.** Method for mobility control, comprising:

determination of market prices for mobility resources in a server arrangement (16; 39-314; 62, 63) on the basis of a demand for the mobility resources, wherein the server arrangement receives demand information from a plurality of vehicles, wherein the demand information relates to a demand for a particular mobility resource of the mobility resources, reception of at least one of the market prices from the server arrangement (16; 39-314; 62, 63) in an apparatus (11; 40) associated with a vehicle (10; 30, 33, 35), stipulation of a preference by a user (61) of the vehicle (10; 30, 33, 35), and determination of a route recommendation on the basis of the at least one received market price and the preference in the apparatus (11; 40) associated with the vehicle (10; 30, 33, 35).

**2.** Method according to Claim 1, **characterized in that** the determination of the market prices comprises an instance of determination of the market prices on the basis of a utilization level of the mobility resources.

**3.** Method according to Claim 1 or 2, **characterized in that** the determination of the market prices comprises an instance of determination of the market prices on the basis of costs of the mobility resources.

**4.** Method according to one of Claims 1-3, **characterized in that** the mobility resources comprise one or more resources selected from the group consisting of: traffic routes, traffic route segments, parking spaces, filling stations and charging columns.

**5.** Method according to one of Claims 1-4, **characterized in that** the route recommendation is determined on the basis of market prices for at least two different types of mobility resources.

**6.** Method according to one of Claims 1-5, **characterized in that** the stipulation of a preference comprises an instance of weighting of optimization parameters.

**7.** Method according to one of Claims 1-6, additionally comprising reception of information about the mobility resources by the server, wherein the determination of market prices comprises an instance of determination of the market prices on the basis of the received information.

**8.** Method according to one of Claims 1-7, **characterized in that** the apparatus (11; 40) associated with the vehicle is arranged in the vehicle (10; 30, 33, 35).

**9.** Apparatus (11; 40) for a vehicle, comprising:

a communication interface (14; 43, 44) for sending a demand information item to a server arrangement and for receiving at least one market price, which is dependent on the demand information item, for a mobility resource from a server arrangement, wherein the server arrangement receives demand information from a plurality of vehicles, wherein the demand information relates to a demand for a particular mobility resource of the mobility resources,
a user interface (13) for receiving a preference by a user, and
a computation device for determining a route recommendation on the basis of the at least one received market price and the received preference.

**10.** Apparatus according to Claim 9, **characterized in that** the apparatus (11; 40) comprises a navigation system and/or an infotainment system for the vehicle (10; 30, 33, 35) .

**11.** Apparatus (11; 40) according to Claim 9 or 10, **characterized in that** the apparatus is set up to send information in respect of at least one mobility resource to the server arrangement (16; 39-314; 62, 63).

**12.** Apparatus according to one of Claims 9-11, **characterized in that** the demand information item comprises an information item in respect of a maximum accepted price.

**13.** Server arrangement (16; 39-314; 62, 63) comprising:

a communication interface (17; 51, 52) for receiving information about mobility resources comprising information in respect of a demand for the mobility resources and for sending market prices from mobility resources to apparatuses (11; 40) associated with vehicles, and a computation device (53) for computing the market prices on the basis of the information, wherein the server arrangement receives demand information from a plurality of vehicles, wherein the demand information relates to a demand for a particular mobility resource of the mobility resources.

**14.** Server arrangement according to Claim 13, **characterized in that** the information about mobility resources comprises information about maximum prices accepted for the mobility resources by road users.

## Revendications

**1.** Procédé de gestion de la mobilité, comprenant de :

déterminer des prix du marché pour des ressources de mobilité dans un dispositif de serveur (16 ; 39-314 ; 62,63) en fonction d'une demande de ressources de mobilité, dans lequel le dispositif de serveur reçoit des informations de demande provenant de plusieurs véhicules, dans lequel les informations de demande se rapportent à une demande d'une ressource de mobilité déterminée des ressources de mobilité,
recevoir au moins un des prix du marché depuis un dispositif de serveur(16 ; 39-314 ; 62,63) dans un dispositif (11 ; 40) coordonné à un véhicule (10 ; 30, 33, 35),
établir une préférence par un utilisateur (61) du véhicule (10 ; 30 , 33, 35) et
déterminer une recommandation de route sur la base de l'au moins un prix du marché reçu et la préférence dans le dispositif (11 ; 40) coordonné au véhicule (10 ; 30, 33, 35).

**2.** Procédé selon la revendication 1, **caractérisé en ce que** la détermination des prix du marché comprend une détermination des prix du marché en fonction d'une utilisation des ressources de mobilité.

**3.** Procédé selon la revendication 1 ou 2, **caractérisé en ce que** la détermination des prix du marché comprend une détermination des prix du marché en fonction des coûts des ressources de mobilité.

**4.** Procédé selon une des revendications 1-3, **caractérisé en ce que** les ressources de mobilité comprennent une ou plusieurs ressources sélectionnées dans le groupe composé de : voies de circulation, segments de voies de circulation, places de parking, stations-service et bornes de recharge.

**5.** Procédé selon une des revendications 1-4, **caractérisé en ce que** la détermination de la recommandation de route a lieu sur la base des prix du marché pour au moins deux types différents de ressources de mobilité.

**6.** Procédé selon une des revendications 1-5, **caractérisé en ce que** la détermination d'une préférence comprend une pondération des paramètres d'optimisation.

**7.** Procédé selon une des revendications 1-6, comprenant en outre la réception d'informations relatives aux ressources de mobilité par l'intermédiaire du serveur, dans lequel la détermination de prix du marché comprend une détermination des prix du marché sur la base des informations reçues.

**8.** Procédé selon une des revendications 1-7, **caractérisé en ce que** le dispositif (11 ; 40) coordonné au véhicule est disposé dans le véhicule (10 ; 30, 33, 35).

**9.** Dispositif (11 ; 40) pour un véhicule, comprenant :

une interface de communication (14 ; 43, 44) pour envoyer une information de demande à un dispositif de serveur et pour recevoir au moins un des prix du marché d'une ressource de mobilité dépendant de l'information de demande à partir du dispositif de serveur, dans lequel le dispositif de serveur reçoit des informations de demande provenant de plusieurs véhicules, dans lequel les informations de demande se rapportent à une demande de ressource de mobilité déterminée des ressources de mobilité, une interface d'utilisateur (13) pour recevoir une préférence par un utilisateur et une unité informatique pour déterminer une recommandation de route sur la base de l'au moins un prix du marché reçu et de la préférence reçue.

**10.** Dispositif selon la revendication 9, **caractérisé en ce que** le dispositif (11 ; 40) comprend un système de navigation et/ou un système d'infodivertissement pour le véhicule (10 ; 30, 33, 35).

**11.** Dispositif (11 ;40) selon la revendication 9 ou 10, **caractérisé en ce que** le dispositif est conçu afin d'envoyer des informations relatives à au moins une ressource de mobilité au dispositif de serveur (16 ; 39-314 ; 62, 63).

**12.** Dispositif selon une des revendications 9-11, **caractérise en ce que** l'information de demande comprend une information relative à un prix maximal accepté.

**13.** Dispositif de serveur (16 ; 39-314 ; 62, 63), comprenant :

une interface de communication (17 ;51,52) pour recevoir des informations relatives à des ressources de mobilité comprenant des informations concernant une demande de ressources de mobilité et pour envoyer des prix du marché pour des ressources de mobilité aux dispositifs coordonnés des véhicules (11 ; 40) et un dispositif informatique (53) pour calculer les prix du marché sur la base des informations, dans lequel le dispositif de serveur reçoit des informations de demande provenant de plusieurs véhicules, dans lequel l'information de demande se rapporte à une demande de ressource de mobilité déterminée des ressources de mobilité.

**14.** Dispositif de serveur selon la revendication 13, **caractérisé en ce que** les informations relatives aux ressources de mobilité comprennent des informations relatives aux prix maximaux acceptés par les participants à la circulation pour les ressources de mobilité.

FIG. 1

FIG. 2

314 — Level$_{i+1}$-Manager

312 — Level$_i$-Manager    Level$_i$-Manager — 313

39 — Level$_{i-1}$-Manager    Level$_{i-1}$-Manager    Level$_{i-1}$-Manager — 311

310

30

36

P

37

38

31    32    33    34    35

## FIG. 3

| Fahrzeug | — 40 |
| --- | --- |
| | Empfangseinheit — 43 |
| | Sendeeinheit — 44 |
| 41 — Recheneinheit | Aktorik — 45 |
| 42 — Datenspeicher | Anzeige — 46 |

## FIG. 4

| Level$_x$ Manager | — 50 |
| --- | --- |
| 51 — Sendeeinheit | Recheneinheit — 53 |
| 52 — Empfangseinheit | Datenspeicher — 54 |

## FIG. 5

Dynamische Zuordnung von Fahrzeugen und Level-Managern

FIG. 6

weniger Energieverbrauch

- 0,75€

70

+ 4min

weniger Fahrzeit

## FIG. 7

Level Manager Parkoptimierung — 80

Parkplatzpreise (aufsteigende Reihenfolge)

P4

P5

P2 — 81

⋮

PN

Level Manager Informationen

Marktpreise = Parkplatzpreise

Fahrzeuginformationen & Nutzerpräferenzen

Parkplatzbewertung Fahrzeug$_i$ — 82

$i = 1...n$

Optimalität der Parkplätze im Zeit-intervall und Zielgebiet gemäß Kosten-funktion (absteigende Reihenfolge)

P4

P5

P8 — 83

⋮

PN

## FIG. 8

FIG. 9

EP 3 044 547 B1

Nachfrage

Derzeitige
Nachfrage

101

Kapazität

102

Nachfrage nach
Preiserhöhung

104

103

Preiserhöhung

100

Marktpreis

## FIG. 10

110

Nutzer
Information

112

Marktpreis

114

Ressourcen
Information

113

Marktpreis-
Nachfrage-
Information

115

Marktpreis

116

117

lokale Optimierung unter
Berücksichtigung von
Präferenz und Marktpreis

dezentrale Ressourcenoptimierung
unter Berücksichtigung von Preis-
Nachfrage-Kurve und Marktpreis

119

111

Preis-Nachfrage-Kurve

118

## FIG. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011122191 A1
- DE 102006014024 A1
- DE 102006032374 A1
- DE 2004001820 A1
- EP 1255964 B1
- DE 102006050096 A1
- EP 2075546 A2
- US 6411895 B1
- US 20110224899 A1